# EUROPEAN PATENT SPECIFICATION

(11) **EP 2 172 323 B1**
(45) Date of publication and mention of the grant of the patent: **08.08.2012**
(21) Application number: 08398012.8
(22) Date of filing: 06.10.2008
(51) Int. Cl.: B29C 45/00, B32B 9/02, B32B 9/04, B32B 27/06, B60N 2/44

(54) **Cork based composite material**
Auf Kork basierender Verbundstoff
Matériau composite à base de liège

(43) Date of publication of application: 07.04.2010
(73) Proprietor: Monte Meao Componentes Auto S.A., 3720-908 Vila de Cucujães (PT)
(72) Inventor: de Magalhães Cerqueira, Fernando António, Apartado 98 3721-908 Cucujães (PT); Rodrigues Lello, José Luis, Apartado 98 3721-908 Cucujães (PT)
(74) Representative: Beck, Michael Rudolf

(56) References cited:
- WO-A-93/24719
- WO-A-2005/037443
- CA-A1- 1 171 776
- CH-A- 395 766
- DE-A1-102007 006 246
- GB-A- 2 020 227
- JP-A- 9 305 309
- US-A- 3 110 615
- US-A1- 2004 183 229

## Description

The present invention relates to a method of making a moulded component made of a cork based composite material. Further, the present invention relates to modes of application of the new material.

Cork is a prime-subset of generic cork tissue which is harvested for commercial use primarily from cork oak trees (Quercus suber). About 50% of the world's cork production comes from Portugal.

The elasticity and impermeability of cork makes it suitable as a material for bottle stoppers. Further, cork is a suitable material for fishing floats and buoys, as well as handles for fishing rods. It is also used in musical instruments, particularly woodwind instruments, where it is used to fasten together segments of the instrument, making the seams airtight. Moreover, sheets of cork, often the by-product of more lucrative stopper production, are used to make floor tiles and bulletin boards. However, it is often difficult to use cork on moulded components.

WO 93/24719 A1 discloses floor tiles having a cork layer as visible and tangible layer on a base layer of resin material. The cork layer is laminated onto the resin layer through thermal pressing and/or with the help of an adhesive. The resin layer is made before connecting it to the cork layer through pressing of resin particles.

JP09305309A discloses a conventional lamination technique for making a mouse pad while it is pointed out that one problem with laminated sheets is that the cork layer may peel off.

The invention aims at increasing the use of cork in moulded products while providing the appearance and/or feeling of a cork surface.

Accordingly, the invention provides a method of making a moulded component made of a cork based a cork based composite material comprising the features of claim 1. In particular, the method comprises the steps of placing cork sheet material in an injection mould, closing the mould, injecting a thermoplastic resin into a space formed between the cork sheet material and the mould, opening the mould, and removing the moulded component from the mould.

The moulded components provide the appearance and/or feeling of a cork surface since the layer of thermoplastic resin injection is moulded onto one side of the cork layer.

The method can be used for moulded components to provide the appearance or feeling of cork to products, which for different reasons cannot be made of cork alone, e.g. because of their shape or required structural stability of the product. In other words, the new material provides mechanical strength, is vandalism-safe and can fulfill fire and smoke requirements.

The cork based composite sandwich material is safe against perforation and tear and thus may be used to cover e.g. seat portions, linings and cover plates in public areas such as public transport vehicles and the like. Of course, the material is also applicable for other purposes.

Advantageous embodiments are indicated in further claims.

A varnish may be applied onto the cork layer of the moulded component after it has been removed from the mould.

In a preferred embodiment of the invention the cork layer is covered with a varnish to protect the cork layer from excessive wear.

Preferably, the varnish is applied in order to maintain the appearance and/or feeling of touch of cork.

In one preferred embodiment the varnish may provide a matt finish. In another preferred embodiment the varnish is made of polyurethane.

According to a further preferred embodiment the cork layer consists of agglomerated pressed cork tissue while the thermoplastic resin is preferably a blend of polycarbonate (PC) and acrylonitrile butadiene styrene (ABS). Of course, it is also possible to over-inject other thermoplastic resins onto the cork layer depending on the purpose of application of the composite material.

Where the composite material is used for structural components, the thickness of the thermoplastic resin is designed to provide the required structural stability while the cork layer provides a cover function only.

The afore-described composite material is preferably used for moulded components such as seats.

In a preferred embodiment of a seat having a sitting area and a backrest at least a portion of the sitting area and/or the backrest are moulded components made of the cork based composite material. Preferably the cork layer is protected against wear by a transparent polyurethane layer while the whole composite material is vandalism-safe.

The moulded components made of cork based composite material may be fixed on a seat shell. In a preferred embodiment surface portions of the seat shell adjacent to the moulded components are flush with adjacent surface portions of the respective moulded component.

Subsequently, the invention will be described in detail by means of a preferred embodiment as shown in the appended drawings.
- Figure 1: shows a moulded component made of a cork based composite material, and
- Figure 2: shows a seat with moulded components made of cork based composite material.

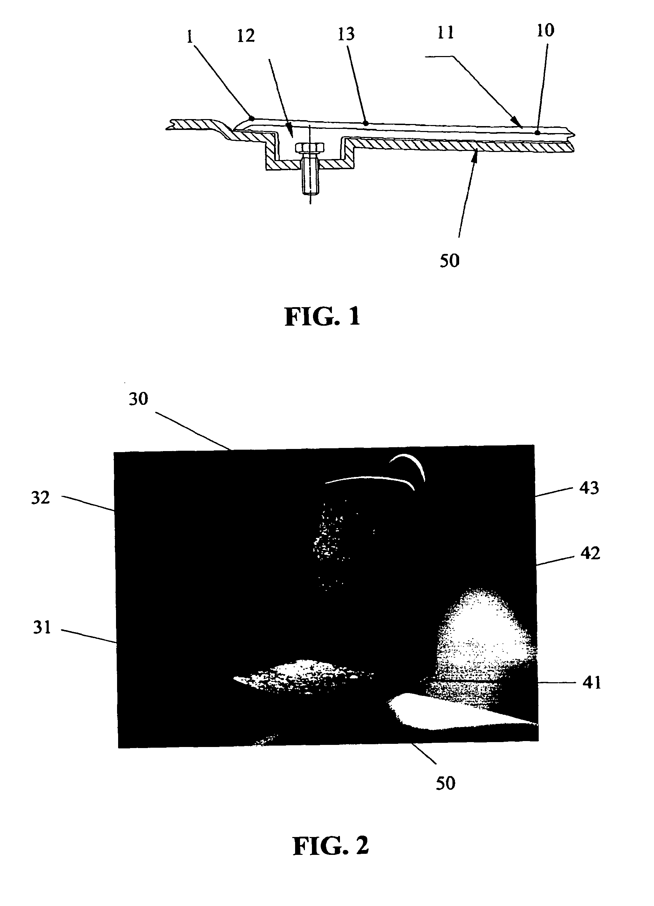

Figure 1 shows one example for a moulded component 1 which may be fixed on a seat shell 50. The moulded component 1 is made of a cork based composite material 10 to provide the appearance and/or feeling of a cork surface.

The composite material comprises a cork layer 11 and a layer of thermoplastic resin 12 in a sandwich configuration. Preferably, the cork layer 11 is made of agglomerated pressed cork tissue while the thermoplastic resin is preferably a blend of PC and ABS to fulfill smoke and fire requirements. The thermoplastic resin is injection moulded onto one side of the cork layer 11. Even though the invention is described in connection with a seat, the cork based composite material 10 can of course be used in other technical applications, e.g. in moulded panels or linings.

Generally, the layer 12 of thermoplastic resin provides the required structural stability of the composite material and moulded component while the cork layer 11 provides a cover function only.

Depending on the purpose of the moulded component the cork layer 11 may be covered with a preferably transparent varnish 13 to maintain the appearance of cork. In the application as shown in figures 1 and 2 the varnish 13 is adapted to protect the cork layer 11 against wear. The varnish 13 is made of polyurethane and may provide a matt finish. Alternatively, the composite material can be fabricated without varnish or a varnish of a different material. Moreover, a semi-matt or shining varnish may be used. Further, it would also be possible to apply an intransparent or semi-transparent varnish on the cork layer 11.

Figure 2 shows the application of the inventive composite material 10 on a seat 30 having a sitting area 31 and a backrest 32. At least a portion of the sitting area 31 and/or the backrest, here one portion of the sitting area 31 and two portions of the backrest 32, which are intended to contact the body of a person sitting on the seat 30, are moulded components 41, 42 and 43 made of the afore-described cork based composite material 10. The cork layer 11 has a thickness of 2.0 to 2.5 mm while the thermoplastic resin layer 12, which gives resistance to the composite of plastic and cork has a thickness of ca. 2.0 to 2.5 mm. These moulded components 41, 42 and 43 are fixed on a seat shell 50 of the seat 30, which in turn may be fitted on a frame by fixing elements on the moulded components 41, 42 and 43.

As shown in figure 2 the outermost layer of each of the moulded components is substantially integrated in the surface of the sitting area 31 and backrest 32. Surface portions of the seat shell 50 adjacent to and around the moulded components 41, 42 and 43 are flush with adjacent surface portions of the respective moulded component 41, 42 and 43.

The cork based composite material 10 is made by placing a cork sheet material in an injection mould. After closing the mould a thermoplastic resin is injected into a space formed between the cork sheet material and the mould. The thermoplastic resin adheres to the cork material so that after opening of the mould the moulded composite material can be taken out. A so shaped moulded component made of cork based composite material can subsequently be provided with a varnish 13 on the cork layer 11.

It is also possible to over-inject cork sheet material with a thermoplastic resin in a continuous process to produce cork based composite material in sheet form which may subsequently be cut and formed e.g. in a heat press.

The invention was described by means of a preferred embodiment. However, the invention is not limited to this embodiment. In particular, the inventive composite material may be used in applications other than seats.

## Claims

1. Method of making a moulded component made of a cork based composite material providing the appearance and/or feeling of a cork surface, comprising the steps of:
- placing cork sheet material in an injection mould,
- closing the mould,
- injecting a thermoplastic resin into a space formed between the cork sheet material and the mould to thereby attach a layer of thermoplastic resin (12) at one side of the cork layer (11),
- opening the mould, and
- removing the moulded component from the mould to thereby obtain a moulded component made of a cork based composite material comprising a cork layer (11) and a layer of thermoplastic resin (12) injection moulded onto one side of the cork layer (11).

2. Method according to claim 1, **characterised in that** a varnish (13) is applied onto the cork layer (11) of the moulded component (41, 42, 43) after its removal from the mould.

3. Method according to claim 2, **characterised in that** the cork layer (11) is covered with a transparent varnish (13).

4. Method according to claim 2 or 3, **characterised in that** the varnish (13) is a wear protection.

5. Method according to one of claims 2 to 4, **characterised in that** the varnish (13) provides a matt finish.

6. Method according to one of claims 2 to 5, **characterised in that** the varnish (13) is made of polyurethane.

7. Method according to one of claims 1 to 6, **characterised in that** the cork layer (11) consists of agglomerated pressed cork tissue.

8. Method according to one of claims 1 to 7, **characterised in that** the thickness of the thermoplastic resin layer (12) is designed to provide structural stability to the composite material while the cork layer (11) provides a cover function only.

9. Method according to one of claims 1 to 8, **characterised in that** the thermoplastic resin is a blend of polycarbonate and acrylonitrile butadiene styrene.

10. Seat having a sitting area (31) and a backrest (32) wherein at least a portion of the sitting area (31) and/or the backrest (32) are moulded components (41, 42, 43) made of a cork based composite material comprising a cork layer (11) and a layer of thermoplastic resin (12) injection moulded onto one side of the cork layer (11) to thereby provide the appearance and/or feeling of a cork surface.

11. Seat according to claim 10, **characterised in that** the moulded components (41, 42, 43) of cork based composite material are fixed on a seat shell (50).

12. Seat according to claim 10 or 11, **characterised in that** surface portions of the seat shell (50) adjacent to the moulded components (41, 42, 43) are flush with adjacent surface portions of the respective moulded component.

13. Seat according to one of claims 10 to 12, **characterised in that** the moulded components (41, 42, 43) of the seat are made according to a method as claimed in one of claims 1 to 9.

## Patentansprüche

1. Verfahren zum Herstellen eines Formteils aus einem auf Kork basierenden Verbundstoff, welcher das Aussehen und/oder die Haptik einer Korkoberfläche bietet, wobei das Verfahren folgende Schritte umfasst:
- Platzieren von Korkplattenmaterial in einer Spritzgussform,
- Schließen der Form,
- Einspritzen eines thermoplastischen Kunststoffes in einem Raum zwischen dem Korkplattenmaterial und der Form, um dadurch eine Schicht des thermoplastischen Kunststoffes (12) auf eine Seite der Korkschicht (11) aufzubringen,
- Öffnen der Form, und
- Entnehmen des Formteils aus der Form, um dadurch ein Formteil aus einem auf Kork basierenden Verbundstoff zu erhalten, der eine Korkschicht (11) sowie eine an eine Seite der Korkschicht (11) angespritzte Schicht aus thermoplastischem Kunststoff (12) umfasst, die spritzgegossen wurde.

2. Verfahren nach Anspruch 1, **dadurch gekennzeichnet, dass** ein Lack (13) auf die Korkschicht (11) des Formteils (41, 42, 43) nach dessen Entnahme aus der Form aufgebracht wird.

3. Verfahren nach Anspruch 2, **dadurch gekennzeichnet, dass** die Korkschicht (11) mit einem transparenten Lack (13) beschichtet wird.

4. Verfahren nach Anspruch 2 oder 3, **dadurch gekennzeichnet, dass** der Lack (13) ein Verschleißschutz ist.

5. Verfahren nach einem der Ansprüche 2 bis 4, **dadurch gekennzeichnet, dass** der Beschichtungsstoff (13) eine matte Oberfläche aufweist.

6. Verfahren nach einem der Ansprüche 2 bis 5, **dadurch gekennzeichnet, dass** der Lack (13) aus Polyurethan hergestellt ist

7. Verfahren nach einem der Ansprüche 1 bis 6, **dadurch gekennzeichnet, dass** die Korkschicht (11) aus agglomeriertem Presskorkgewebe besteht.

8. Verfahren nach einem der Ansprüche 1 bis 7, **dadurch gekennzeichnet, dass** die Dicke der thermoplastischen Kunststoffschicht (12) dazu ausgelegt ist, dem Verbundstoff Tragfähigkeit zu verleihen, wohingegen die Korkschicht (11) lediglich eine Abdeckfunktion aufweist.

9. Verfahren nach einem der Ansprüche 1 bis 8, **dadurch gekennzeichnet, dass** der thermoplastische Kunststoff eine Mischung aus Polycarbonat und Acrylnitril-Butadien-Styrol ist.

10. Sitz mit einer Sitzfläche (31) und einer Rückenlehne (32), wobei mindestens ein Teil der Sitzfläche (31) und/oder der Rückenlehne (32) aus Formteilen (41, 42, 43) aus einem auf Kork basierenden Verbundstoff besteht, der eine Korkschicht (11) und eine Schicht aus thermoplastischem Kunststoff (12) umfasst, die an eine Seite der Korkschicht (11) angespritzt worden ist, um so das Aussehen und/oder die Haptik einer Korkoberfläche bereitzustellen.

11. Sitz nach Anspruch 10, **dadurch gekennzeichnet, dass** die Formteile (41, 42, 43) aus auf Kork basierenden Verbundstoff an einer Sitzschale (50) befestigt sind.

12. Sitz nach Anspruch 10 oder 11, **dadurch gekennzeichnet, dass** die Oberflächenteile der Sitzschale (50), die an die Formteile (41, 42, 43) angrenzen, flächenbündig mit den angrenzenden Oberflächenteilen der jeweiligen Formteile abschließen.

13. Sitz nach einem der Ansprüche 10 bis 12, **dadurch gekennzeichnet, dass** die Formteile (41, 42, 43) des Sitzes gemäß einem Verfahren nach einem der Ansprüche 1 bis 9 hergestellt sind.

## Revendications

1. Procédé de fabrication d'un composant moulé en un matériau composite à base de liège procurant l'apparence et/ou le ressenti d'une surface en liège comprenant les étapes de :
- placement d'un matériau en feuille de liège dans un moule à injection,
- fermeture du moule,
- injection d'une résine thermoplastique dans un espace formé entre le matériau en feuille de liège et le moule pour y fixer ainsi une couche de résine thermoplastique (12) sur un côté de la couche de liège (11),
- ouverture du moule et
- enlèvement du composant moulé du moule pour obtenir ainsi un composant moulé fait d'un matériau composite à base de liège comprenant une couche de liège (11) et une couche de résine thermoplastique (12) moulée sur un côté de la couche de liège (11).

2. Procédé selon la revendication 1, **caractérisé en ce qu'**un vernis (13) est appliqué sur la couche de liège (11) du composant moulé (41, 42, 43) après l'avoir enlevé du moule.

3. Procédé selon la revendication 2, **caractérisé en ce que** la couche de liège (11) est couverte par un vernis transparent (13).

4. Procédé selon la revendication 2 ou 3, **caractérisé en ce que** le vernis (13) est une protection contre l'usure.

5. Procédé selon l'une des revendications 2 à 4, **caractérisé en ce que** le vernis (13) crée un fini mat.

6. Procédé selon l'une des revendications 2 à 5, **caractérisé en ce que** le vernis (13) est en polyuréthane.

7. Procédé selon l'une des revendications 1 à 6, **caractérisé en ce que** la couche de liège (11) est en tissu de liège pressé aggloméré.

8. Procédé selon l'une des revendications 1 à 7, **caractérisé en ce que** l'épaisseur de la couche de résine thermoplastique (12) est conçue pour fournir une stabilité de la structure au matériau composite tandis que la couche de liège (11) procure seulement une fonction de couverture.

9. Procédé selon l'une des revendications 1 à 8, **caractérisé en ce que** la résine thermoplastique est un mélange de polycarbonate et d'acrylonitrile butadiène styrène.

10. Siège ayant une surface de siège (31) et un dossier (32), dans lequel au moins une portion de la surface de siège (31) et/ou du dossier (32) sont des composants moulés (41, 42, 43) faits en un matériau composite à base de liège comprenant une couche de liège (11) et une couche de résine thermoplastique (12) moulée par injection sur un côté de la couche de liège (11) pour procurer ainsi l'apparence et/ou le ressenti d'une surface en liège.

11. Siège selon la revendication 10, **caractérisé en ce que** les composants moulés (41, 42, 43) du matériau composite à base de liège sont fixés sur une coque de siège (50).

12. Siège selon la revendication 10 ou 11, **caractérisé en ce que** des portions de surface de la coque de siège (50) adjacentes aux composants moulés (41, 42, 43) sont à fleur avec des portions de surface adjacentes du composant moulé respectif.

13. Siège selon l'une des revendications 10 à 12, **caractérisé en ce que** les composants moulés (41, 42, 43) du siège sont fabriqués selon un procédé selon l'une des revendications 1 à 9.
